# FASCICULE DE BREVET EUROPEEN

(11) **EP 3 181 310 B1**
(45) Date de publication et mention de la délivrance du brevet: **18.09.2019**
(21) Numéro de dépôt: 17154885.2
(22) Date de dépôt: 19.12.2013
(51) Int. Cl.: B26D 3/20, B26D 5/14

(54) **APPAREIL DE DECOUPE D'ALIMENTS A MOUVEMENT ALTERNATIF AVEC RECIPIENT AMOVIBLE LAVABLE**
GERÄT ZUM SCHNEIDEN VON LEBENSMITTELN MIT ABWECHSELNDEN BEWEGUNGEN MIT HERAUSNEHMBAREM, WASCHBAREM BEHÄLTER
APPARATUS FOR CUTTING FOOD WITH ALTERNATING MOVEMENT WITH REMOVABLE WASHABLE CONTAINER

(30) Priorité: 21.12.2012 FR 1262565
(43) Date de publication de la demande: 21.06.2017
(62) Demande divisionnaire de: 13827018.6
(73) Titulaire: SEB S.A., 69130 Ecully (FR)
(72) Inventeur: CYPRES, Régis, 65100 LOURDES (FR); PEDRICO, Pascal, 65380 BENAC (FR); VALLINO, Vincent, 06200 NICE (FR)
(74) Mandataire: Bourrières, Patrice

(56) Documents cités:
- EP-A1- 0 750 873
- CN-A- 101 229 020
- US-A1- 2008 156 204
- US-A1- 2008 308 661

## Description

La présente invention concerne le domaine technique des appareils ménagers de découpe, manuels ou motorisés, également appelés mandolines, utilisés pour découper des aliments, notamment en tranches ou en filaments, par un mouvement alternatif d'un outil de coupe.

Une demande CN101229020 a proposé un appareil ménager de découpe linéaire comprenant un châssis délimitant une chambre de travail qui intègre une zone de coupe qui est fixe par rapport au châssis. L'appareil comprend aussi une goulotte d'introduction d'aliments à découper qui est portée par un couvercle amovible rapporté sur le châssis et située au dessus de la zone de coupe en étant fixe par rapport à la zone de coupe et qui s'étend selon une direction Δ. Le couvercle amovible ferme alors le dessus de la chambre de travail. Enfin, l'appareil est pourvu d'un outil de coupe mobile par rapport au châssis dans la zone de coupe. L'outil de coupe mobile est déplacé par des moyens de manoeuvre motorisés selon un mouvement alternatif dans un plan de coupe sensiblement normal à la direction d'extension de la goulotte. Les moyens de manoeuvre comprennent une roue à excentrique entrainée en rotation par le moteur électrique. Un doigt excentré de cette roue se déplace dans une fenêtre solidaire d'un chariot lié à un organe d'accouplement avec l'outil de coupe de sorte que la rotation de la roue est transformée en une translation de l'organe d'accouplement. Les moyens de manoeuvre sont entrainés par un moteur électrique piloté par un interrupteur porté par le châssis.

Un tel appareil ménager de découpe linéaire permet alors de découper des aliments en tranches ou encore de les râper de manière à former des filaments. Toutefois, cet appareil présente l'inconvénient de ne pas être facile à nettoyer.

Ainsi, il est apparu le besoin d'un appareil électroménager de type de mandoline électrique qui soit plus facile à nettoyer.

L'invention concerne un appareil de découpe d'aliments comprenant :
- un châssis délimitant une chambre de travail qui intègre une zone de coupe et qui est ouverte vers le bas au niveau de la zone de coupe,
- un couvercle monté mobile sur le châssis, le couvercle présentant une goulotte d'introduction d'aliments à découper située au-dessus de la zone de coupe et fermant la chambre de travail sur le dessus,
- un outil de coupe mobile par rapport au châssis au moins dans la zone de coupe et selon un mouvement alternatif rectiligne dans un plan de coupe,
- des moyens de manoeuvre de l'outil de coupe mobile qui comprennent un système de transmission présentant un organe d'entraînement entraînant un organe d'accouplement de l'outil de coupe,
- une cuvette de réception de talon d'aliments adjacente à la zone de coupe, la cuvette étant située à l'opposé de l'organe d'entraînement par rapport à la zone de coupe.

Dans une telle configuration, l'appareil ne comprend pas nécessairement le réceptacle intermédiaire amovible, et la cuvette peut être amovible ou faire partie intégrante du châssis.

Selon un mode de réalisation de l'invention, l'appareil de découpe d'aliments est caractérisé :
- en ce que les moyens de manoeuvre comprennent un moteur électrique associé au système de transmission,
- en ce que le couvercle peut être placé dans une position verrouillée sur le châssis, dans laquelle le couvercle couvre la chambre de travail de manière à ce que la zone de coupe et l'outil de coupe ne soient pas accessibles par le dessus de l'appareil,
- et en ce qu'il comprend des moyens de commande du moteur électrique qui comprennent un organe de commande placé sur le couvercle et sont adaptés pour qu'une action sur l'organe de commande permette une mise en marche du moteur électrique lorsque le couvercle est en position verrouillée.

Ainsi, la mise oeuvre combinée du couvercle verrouillable et des moyens de commande permet de faire obstacle à une mise en marche accidentelle du moteur électrique alors que le couvercle n'est pas convenablement mis en place sur le châssis. Les risques de blessure grave résultant d'un contact accidentel avec l'outil de coupe alors qu'il est actionné par le moteur électrique sont alors fortement réduits.

Selon un mode de réalisation avantageux :
- le couvercle est mobile entre la position verrouillée et une position déverrouillée dans laquelle le couvercle peut être retiré de manière à offrir un accès au moins à la zone de coupe,
- les moyens de commande du moteur électrique sont adaptés pour qu'une action sur l'organe de commande ne permette pas une mise en marche du moteur électrique lorsque le couvercle est en position déverrouillée.

En d'autres termes, le couvercle peut être déplacé sur le châssis entre la position verrouillée et une position déverrouillée dans laquelle l'appareil ne peut plus fonctionner et à partir de laquelle le couvercle peut être encore déplacé pour accéder à l'outil de coupe.

Selon une forme de réalisation de l'invention :
- les moyens de commande comprennent un interrupteur situé dans le châssis de l'appareil, l'interrupteur étant actionné par l'intermédiaire d'une tige de commande disposée dans un alésage du châssis agencé en regard du couvercle occupant la position verrouillée,
- l'organe de commande est formé par un bouton-poussoir qui est adapté pour actionner la tige de commande lorsque le couvercle est en position verrouillée, si désiré par l'intermédiaire d'un élément de transmission.

Ainsi, les risques d'actionnement accidentel à la main dudit interrupteur sont réduits.

Avantageusement alors, l'extrémité supérieure de la tige de commande affleure au niveau d'une surface supérieure du châssis située sous le couvercle.

Avantageusement encore, l'alésage possède un diamètre inférieur ou égal à 1 cm. Une telle dimension permet d'éviter que l'interrupteur puisse être directement actionné avec le doigt d'une main d'utilisateur alors que le couvercle n'est pas en place.

Avantageusement encore, le bouton-poussoir est solidaire d'un doigt de manoeuvre qui présente un diamètre inférieur à celui de l'alésage et qui est situé en regard de l'alésage lorsque le couvercle est en position verrouillée et décalé par rapport à l'alésage lorsque le couvercle est en position déverrouillée. Ainsi, lorsque le bouton poussoir est enfoncé, l'engagement du doigt de manoeuvre dans l'alésage bloque une éventuelle translation du couvercle.

Selon une variante de réalisation, la tige de commande est actionnée par l'intermédiaire de l'élément de transmission qui est disposé dans un autre alésage du réceptacle intermédiaire amovible. Cette disposition permet d'éviter une utilisation de l'appareil en l'absence du réceptacle intermédiaire amovible.

Avantageusement alors, l'extrémité supérieure de la tige de commande affleure au niveau d'une surface supérieure du réceptacle intermédiaire amovible située sous le couvercle.

Avantageusement encore, le bouton-poussoir est solidaire d'un doigt de manoeuvre qui présente un diamètre inférieur à celui de l'autre alésage et qui est situé en regard de l'autre alésage lorsque le couvercle est en position verrouillée et décalé par rapport à l'autre alésage lorsque le couvercle est en position déverrouillée.

Avantageusement encore l'autre alésage possède un diamètre inférieur ou égal à 1 cm.

Avantageusement encore, l'interrupteur possède une position ouverte stable et une position fermée instable. Cette variante de réalisation permet d'éviter que le moteur ne soit en fonctionnement alors qu'aucune action n'est exercée sur l'interrupteur.

Selon une autre caractéristique de l'invention, les moyens de commande sont adaptés pour arrêter le fonctionnement du moteur électrique en cas de relâchement de l'action sur l'organe de commande.

Selon un mode de réalisation avantageux, le couvercle est amovible par rapport au châssis. Cette disposition permet de simplifier la construction de l'appareil.

Avantageusement alors, le couvercle est monté mobile en translation sur le châssis vers la position verrouillée. Cette disposition permet de faciliter l'utilisation de l'appareil en simplifiant la mise en place du couvercle.

Bien entendu, les différentes variantes et formes de réalisation de l'invention peuvent être associées les unes avec les autres selon diverses combinaisons dans la mesure où elles ne sont pas incompatibles ou exclusives les unes des autres.

Par ailleurs, diverses autres caractéristiques de l'invention ressortent de la description annexée effectuée en référence aux dessins qui illustrent une forme non limitative de réalisation d'un appareil de découpe conforme à l'invention ainsi que diverses formes de réalisation d'outils de coupe interchangeables susceptibles de l'équiper.
- La figure 1 est une vue en perspective d'un appareil de découpe selon l'invention.
- La figure 2 est une vue en coupe longitudinale de l'appareil illustré à la figure 1 avec son couvercle en position verrouillée.
- La figure 3 est une vue en perspective et en éclaté de l'appareil de découpe illustré à la figure 1.
- La figure 4 est une vue en coupe longitudinale analogue à la figure 2 montrant le couvercle de l'appareil selon l'invention en position déverrouillée.
- La figure 5 est une vue en coupe longitudinale du couvercle seul.
- La figure 6 est une vue de dessus d'un réceptacle intermédiaire amovible équipant l'appareil selon l'invention.
- La figure 7 est une vue en élévation de côté du réceptacle intermédiaire amovible illustré à la figure 6.
- La figure 8 illustre en perspective un outil de coupe susceptible d'être utilisés avec l'appareil de découpe illustré sur les figures 1 à 4.
- Les figures 9 et 10 illustrent en perspective deux exemples de réalisation d'un outil de coupe et d'un outil de coupe complémentaire susceptibles d'être utilisés avec l'appareil de découpe illustré sur les figures 1 à 4.
- Les figures 11 et 12 sont des vues en perspective de l'outil de coupe et de l'outil de coupe complémentaire illustrés sur les figures 9 et 10.
- Les figures 13 et 14 sont des vues en coupe longitudinale de l'outil de coupe et de l'outil de coupe complémentaire illustrés sur les figures 9 et 11 d'une part et sur les figures 10 et 12 d'autre part.
- La figure 15 est une vue schématique du principe de fonctionnement combiné de l'outil de coupe et de l'outil de coupe complémentaire illustrés sur les figures 9, 11 et 13.

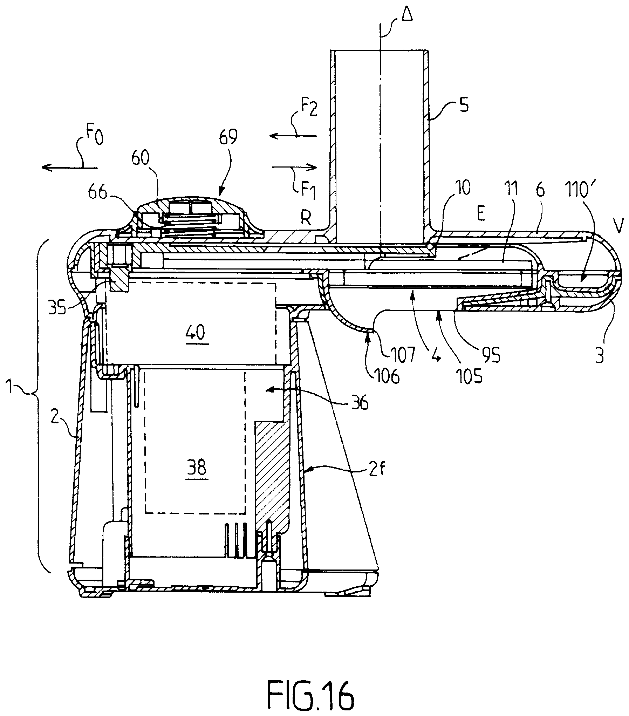

- La figure 16 illustre en perspective une variante de réalisation d'un appareil de découpe selon l'invention.

Il est à noter que sur ces figures les éléments structurels et/ou fonctionnels communs aux différentes variantes peuvent présenter les mêmes références.

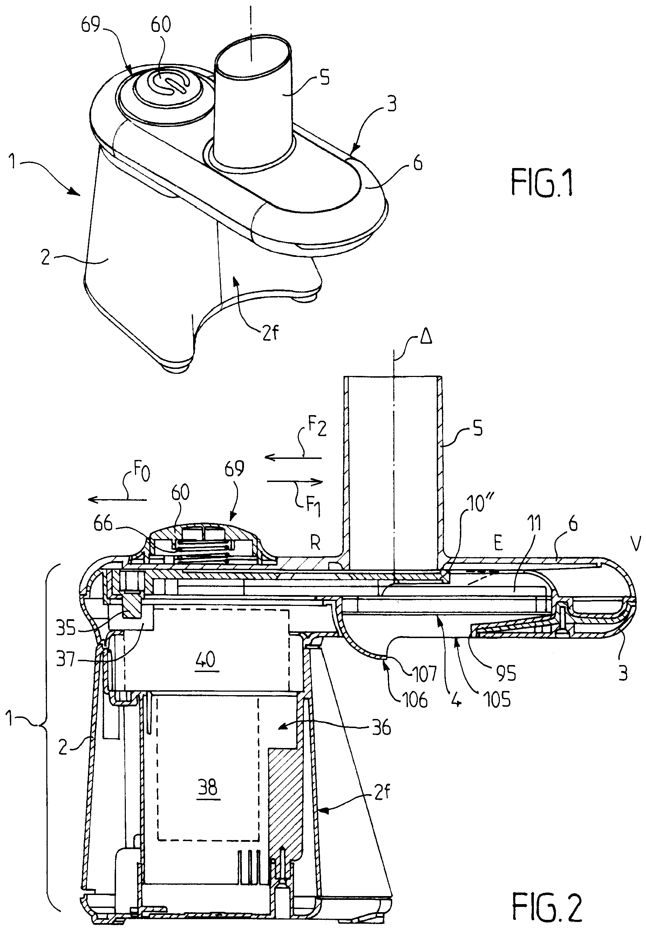

Un appareil de découpe d'aliments selon l'invention, tel qu'illustré aux figures 1 à 3, comprend un châssis 1 formé, selon l'exemple illustré, d'un tronc 2 destiné à être posé sur un support et d'une tête 3 qui s'étend en porte-à-faux à partir du tronc 2 et qui délimite, de manière décalée latéralement au tronc 2, une zone de coupe 4. Ainsi, la zone de coupe 4 se trouve située en hauteur par rapport au support sur lequel repose le châssis 1 de sorte qu'il est possible de placer un récipient sous la zone de coupe 4 pour recueillir les aliments découpés au moyen d'outils de coupe situés dans ladite zone de coupe 4 comme cela apparaîtra par la suite. Selon l'exemple illustré, la face 2f du tronc orientée vers la zone de coupe 4 est concave de manière à pouvoir épouser la forme arrondie d'un bol, d'un saladier ou encore d'une assiette de sorte que ceux-ci soient correctement positionnés sous la zone de coupe 4.

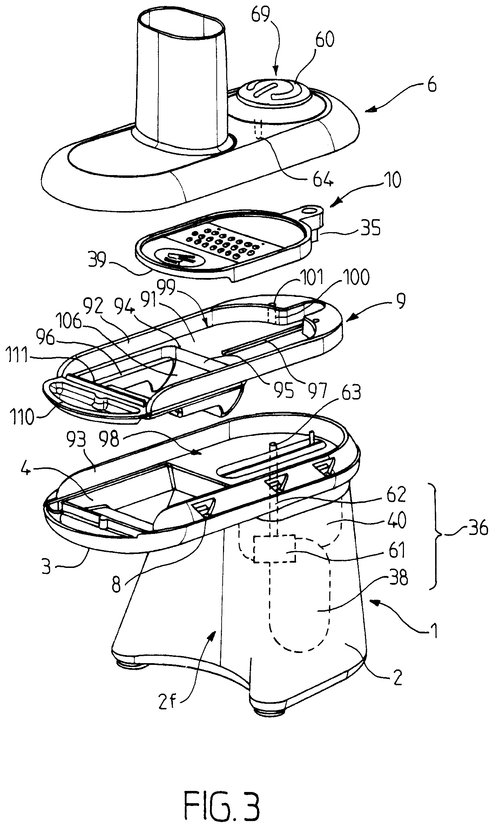

L'appareil de découpe d'aliments selon l'invention comprend également une goulotte 5 d'introduction d'aliments à découper qui est solidaire du châssis 1 et se trouve située au-dessus de la zone de coupe 4. Selon l'exemple illustré, la goulotte 5 est intégrée à un couvercle 6 amovible qui peut être complètement retiré du châssis 1 de manière à libérer l'accès à la partie supérieure du châssis 1 et de la tête 3, comme le montre la figure 3. La goulotte 5 s'étend selon une direction Δ sensiblement verticale. La goulotte 5 est fixe par rapport à la zone de coupe 4. La zone de coupe 4 est fixe par rapport au châssis 1.

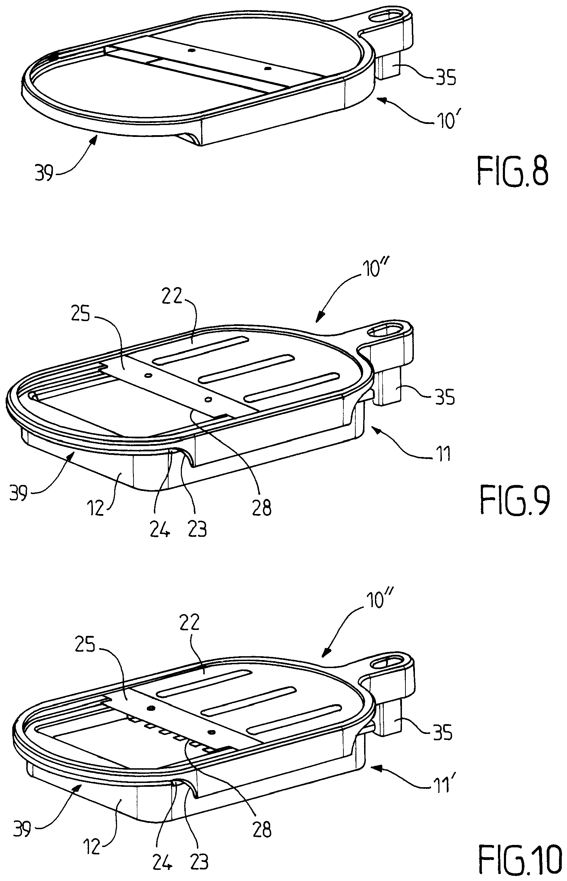

Afin de permettre la découpe des aliments introduits dans la goulotte 5, l'appareil comprend au moins un outil de coupe 10 ; 10'; 10" mobile par rapport au châssis 1 au moins dans la zone de coupe 4 selon un mouvement alternatif rectiligne dans un plan de coupe C. Dans l'exemple de réalisation illustré, les outils de coupe 10 ; 10'; 10" sont interchangeables et sont amovibles par rapport au châssis 1. L'outil de coupe 10 mobile illustré sur la figure 3 est prévu pour râper les aliments ; l'outil de coupe 10' mobile illustré sur la figure 8 est prévu pour émincer les aliments; l'outil de coupe 10" mobile illustré sur les figures 9 à 12 est associé à un outil de coupe complémentaire 11 ; 11' fixe par rapport au châssis 1.

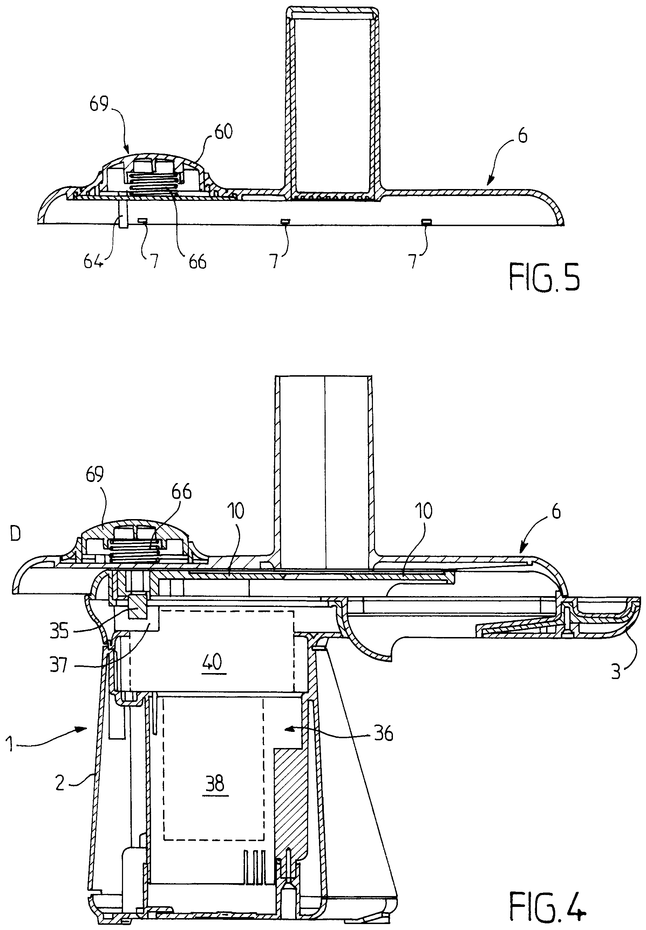

Afin d'assurer la stabilité du couvercle 6, le couvercle 6 peut être placé dans une position verrouillée V sur le châssis 1, illustrée figures 1 et 2, dans laquelle le couvercle 6 couvre la zone de coupe 4 et l'outil de coupe 10 de manière à ce que ceux-ci ne soient pas accessibles par le dessus de l'appareil. Pour permettre un retrait du couvercle 6, le couvercle 6 est mobile en translation dans le sens de la flèche F₀ depuis la position verrouillée V vers une position déverrouillée D illustrée à la figure 4. Lorsque le couvercle 6 est en position déverrouillée, le couvercle 6 peut alors être facilement retiré.

Le couvercle 6 peut occuper une position verrouillée sur le châssis 1, dans laquelle le couvercle 6 couvre la zone de coupe 4 et l'outil de coupe 10 ; 10' ; 10", de manière à ce que ceux-ci ne soient pas accessibles par le dessus de l'appareil.

La stabilité de la position verrouillée du couvercle 6 est assurée par des pions 7, visibles figure 5, portés par les deux côtés longitudinaux du couvercle 6. Chaque pion 7 coopère chacun avec une rampe de verrouillage 8 portée par le côté longitudinal correspondant de la tête 3 et visible figure 3. Selon l'exemple illustré, le couvercle 6 comprend, sur la face interne de chaque côté longitudinal, trois pions 7 qui coopèrent avec trois rampes de verrouillage 8 portées par la face externe du côté longitudinal correspondant de la tête 3.

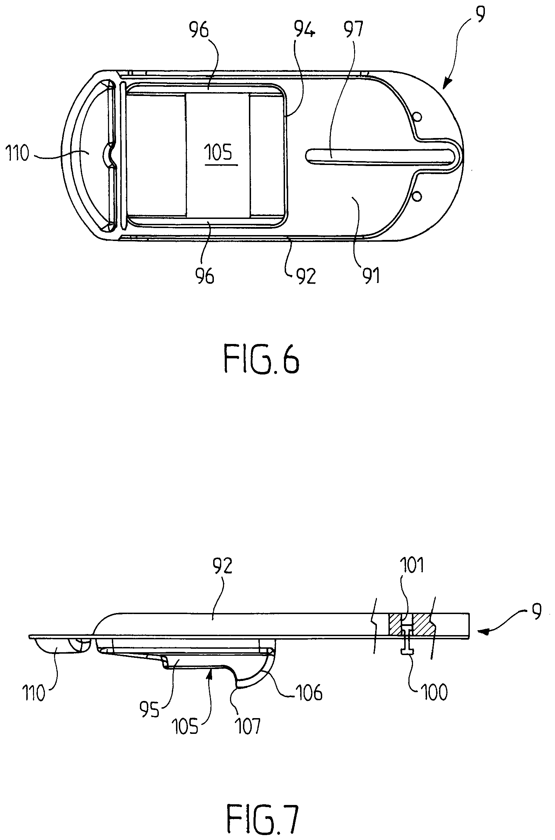

Par ailleurs, la tête 3 définit une chambre de travail 98 qui intègre la zone de coupe 4. La tête 3 présente une paroi périphérique 93 délimitant au moins en partie la chambre de travail 98. La chambre de travail 98 est ouverte vers le bas au niveau de la zone de coupe 4. La chambre de travail 98 est fermée sur le dessus par le couvercle 6. La chambre de travail 98 loge un réceptacle intermédiaire amovible 9 qui présente une forme complémentaire à la forme de la chambre de travail 98. Le réceptacle intermédiaire amovible 9 forme une glissière 99 à l'intérieur de laquelle l'outil de coupe 10 mobile peut se déplacer en translation. La glissière 99 présente deux bords latéraux 92 reliés par un plancher 91 prévu pour recouvrir en partie le fond de la chambre de travail 98. Comme le montrent les figures 6 et 7 notamment, le plancher 91 présente, au niveau de la zone de coupe 4, une fenêtre 94 de chute des aliments découpés, comme cela apparaîtra par la suite. Les bords latéraux 92 de la glissière 99 se prolongent de part et d'autre de la fenêtre 94 et se rejoignent à l'une de leurs extrémités. Les bords latéraux 92 suivent la paroi périphérique 93 de la tête 3 délimitant la chambre de travail 98. La fenêtre 94 est bordée par une jupe périphérique 95 qui s'étend vers le bas en délimitant une ouverture 105 de chute des aliments découpés. La jupe périphérique 95 présente deux épaulements longitudinaux 96. L'ouverture 105 délimitée par la jupe périphérique 95 est située en dessous de la fenêtre 94. Certaines parties au moins de la jupe périphérique 95 convergent vers l'ouverture 105 de sorte que l'ouverture 105 présente une section de passage plus petite que la section de passage de la fenêtre 94. Cette réduction de section permet de limiter l'accès à la zone de coupe 4 par le dessous.

Par ailleurs, la jupe périphérique 95 comprend, dans sa région orientée vers le tronc 2, une bavette 106 qui présente une hauteur supérieure au reste de la jupe périphérique 95. Selon l'exemple illustré, la bavette 106 présente la forme d'une portion de cylindre d'axe horizontal dont la concavité est orientée vers la fenêtre 94. Ainsi, la bavette 106 s'étend de la fenêtre 94 vers l'ouverture 105 en convergeant vers l'ouverture 105.

De plus, dans le cas présent et comme le montre la figure 2, un bord 107 inférieur de la bavette 106, qui délimite une partie de l'ouverture 105, se trouve au dessus et de préférence au-delà en direction de la zone de coupe 4 de la face 2f du tronc 2 orientée vers ladite zone de coupe 4. Cette disposition avantageuse de l'invention évite un ruissellement ou une projection des jus de coupe sur le tronc 2 lors du fonctionnement de l'appareil.

Tel que représenté sur la figure 2, l'outil de coupe complémentaire 11 est fixe par rapport au châssis 1 en étant situé dans la zone de coupe 4 sous la goulotte 5 de manière à ce que l'outil de coupe 10" se déplace entre la goulotte 5 et l'outil de coupe complémentaire 11. L'outil de coupe 10" est, dans le cas présent, mobile en translation selon une direction D sensiblement normale à la direction Δ d'extension de la goulotte 5.

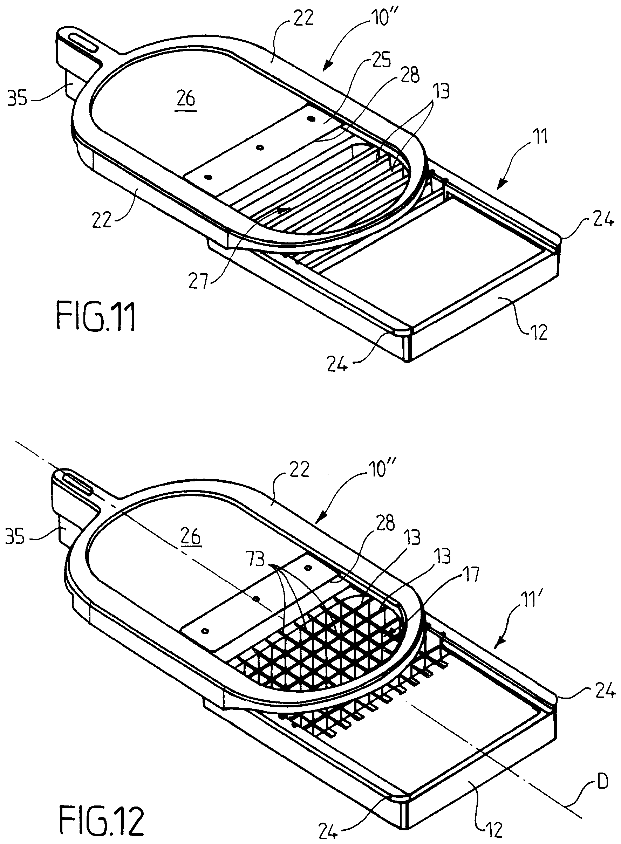

L'outil de coupe complémentaire 11 comprend, comme le montrent plus particulièrement les figures 9 et 11, un corps 12 de forme générale sensiblement parallélépipédique. Le corps 12 est alors destiné à venir s'insérer dans le logement défini par la fenêtre 94 de chute et la jupe périphérique 95 en venant en appui sur les deux épaulements longitudinaux 96 de la jupe périphérique 95. Selon l'exemple illustré, le corps 12 comprend, dans sa région destinée à être placée dans la zone de coupe 4 en regard de la goulotte 5, une première série d'organes de coupe 13 parallèles entre eux. Chaque organe de coupe 13 s'étend alors dans un plan, d'une part, sensiblement parallèle à la direction Δ d'extension de la goulotte et, d'autre part, sensiblement perpendiculaire à la direction D de déplacement de l'outil de coupe 10". De plus, chaque organe de coupe 13 comprend une arrête de coupe orientée vers le haut en direction de la goulotte 5.

L'outil de coupe 10" comprend un corps 22 pourvu de deux rainures latérales 23 destinées à venir s'engager sur deux languettes longitudinales 24 portées par le corps 12 de l'outil de coupe complémentaire 11 de sorte que l'outil de coupe 10" et l'outil de coupe complémentaire 11 sont liés l'un à l'autre par une liaison glissière assurant le guidage de l'outil de coupe 10" lors de ses mouvements alternatifs. Dans le cas présent, l'outil de coupe 10" et l'outil de coupe complémentaire 11 sont solidaires et forment un ensemble adapté de manière amovible sur le châssis 1.

Le corps 22 porte une lame 25 qui se trouve à l'avant d'une partie pleine 26 du corps 22 et à l'arrière d'une fenêtre de coupe 27 délimitée par le corps 22. La lame 25 comprend une arrête de coupe principale 28 située dans un plan de coupe C. Dans le cas présent, le plan de coupe C est sensiblement normal à la direction Δ d'extension de la goulotte 5.

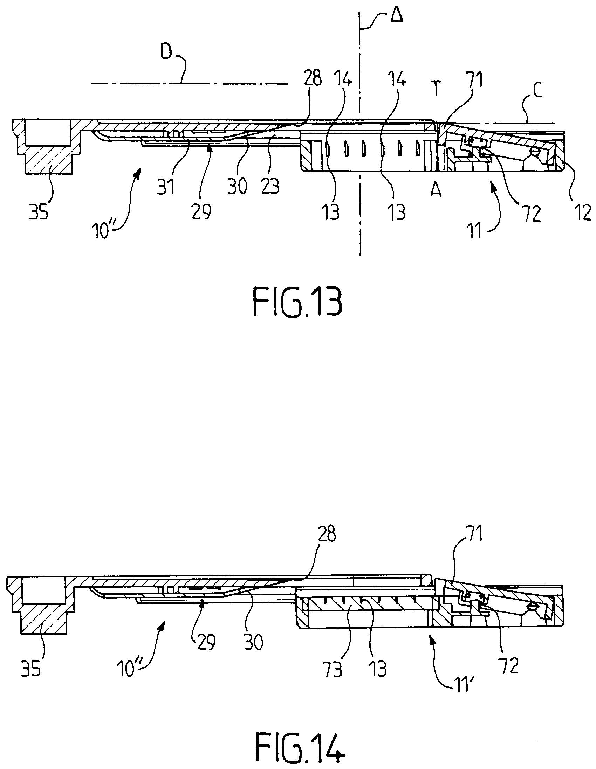

Tel que mieux visible sur la figure 13, l'outil de coupe 10" comprend également un sabot presseur 29 qui est issu de l'arrête de coupe principale 28 et agencé du côté de l'outil de coupe complémentaire 11. Le sabot presseur 29 comprend un biseau 30 incliné à partir de l'arrête de coupe principale 28 vers l'intérieur de l'outil de coupe 10" et dans une direction opposée au sens de travail indiqué par la flèche F1. Selon l'exemple illustré le biseau 30 se prolonge par un talon 31 sensiblement parallèle au plan de coupe C. Le sabot presseur 29 possède, selon l'exemple illustré, une épaisseur h suffisante pour occuper la majeure partie de l'espace situé entre l'outil de coupe complémentaire 11 et l'extrémité inférieure de la goulotte 5. L'épaisseur h, mesurée entre le plan de coupe et l'extrémité du biseau 30 opposée à l'arrête de coupe principale 28, est, de préférence, supérieure ou égale à 4 mm.

L'appareil de découpe d'aliments comprend des moyens de manoeuvre 36 de l'outil de coupe 10" mobile. Les moyens de manoeuvre 36 sont adaptés pour assurer un déplacement de l'outil de coupe 10" selon un mouvement alternatif de translation rectiligne dans un sens de travail indiqué par la flèche F1 et dans un sens de retour indiqué par la flèche F2.

Le corps 22 de l'outil de coupe 10" comprend, au niveau d'une partie arrière, un organe d'accouplement 35 avec les moyens de manoeuvre 36. L'outil de coupe 10" se déplace alors entre :
- une position de repos R, représentée en traits pleins à la figure 2, dans laquelle l'arrête de coupe principale 28 est située en amont de la zone de coupe 4, par référence au sens de travail indiqué par la flèche F1,
- et une position d'extension E, symbolisée en traits discontinus à la figure 2, dans laquelle l'arrête de coupe principale 28 est située en aval de la zone de coupe 4, par référence au sens de travail indiqué par la flèche F1.

L'outil de coupe 10" est ainsi mobile par rapport au châssis 1 au moins dans la zone de coupe 4, selon un mouvement alternatif dans le plan de coupe C.

Selon l'exemple illustré, les moyens de manoeuvre 36 sont intégrés au châssis 1. Les moyens de manoeuvre 36 sont motorisés et comprennent un organe d'entraînement 37 complémentaire de l'organe d'accouplement 35 de l'outil de coupe 10". Par ailleurs le plancher 91 du réceptacle intermédiaire amovible 9 présente une fente 97 d'orientation longitudinale pour le passage de l'organe d'accouplement 35 de l'outil de coupe 10". En alternative, le plancher 91 du réceptacle intermédiaire amovible 9 pourrait présenter une fente 97 pour le passage de l'organe d'accouplement 35 et/ou de l'organe d'entraînement 37.

Les moyens de manoeuvre 36 comprennent, par ailleurs, un moteur électrique 38 entraînant un système de transmission 40 adapté pour assurer un déplacement rectiligne alternatif à l'organe d'entraînement 37, le moteur électrique 38 et le système de transmission 40 étant représentés de manière schématique sur les figures 2 à 4.

La mise en marche et l'arrêt du moteur électrique 38 sont assurés par des moyens de commande qui comprennent un organe de commande 69 placé sur le couvercle 6. Selon l'exemple illustré l'organe de commande 69 est formé par un bouton-poussoir 60 mobile en translation sensiblement verticale entre une position relevée illustrée à la figure 5 et une position abaissée non représentée. Les moyens de commande comprennent, d'autre part, un interrupteur 61 qui est situé dans le châssis 1, plus particulièrement dans le tronc 2. L'interrupteur 61 est actionné par l'intermédiaire d'une tige de commande 62 située sous le couvercle 6 lorsque celui-ci est en place. La tige de commande 62 est disposée dans un alésage 63 agencé en regard du couvercle 6 occupant la position verrouillée.

Plus particulièrement dans l'exemple de réalisation illustré sur la figure 3, la tige de commande 62 est montée dans le châssis 1, et l'extrémité supérieure de la tige de commande 62 affleure au niveau d'une surface supérieure du châssis 1 située sous le couvercle 6 dans la chambre de travail 98.

L'alésage 63 présente, de préférence, des dimensions suffisamment petites pour empêcher une manoeuvre de la tige de commande 62 avec le doigt d'une main d'un utilisateur adulte, voire d'un enfant. Dans le cas d'un alésage 63 cylindrique de révolution, le diamètre de ce dernier sera de préférence inférieur à 1 cm. Le diamètre de l'alésage 63 est par exemple de 6,5 mm.

La tige de commande 62 est actionnée par l'intermédiaire d'un élément de transmission 100 qui est disposé dans un autre alésage 101 du réceptacle intermédiaire amovible 9. Plus particulièrement, l'extrémité supérieure de l'élément de transmission 100 affleure au niveau d'une surface supérieure du réceptacle intermédiaire amovible 9 située sous le couvercle 6.

Afin de permettre l'actionnement de l'élément de transmission 100 et, donc, de la tige de commande 62, le bouton-poussoir 60 est solidaire d'un doigt de manoeuvre 64 qui présente un diamètre inférieur à celui de l'autre alésage 101 et qui est situé en regard de l'autre alésage 101 lorsque le couvercle 6 est en position verrouillée sur le châssis 1 et décalé par rapport à l'autre alésage 101 lorsque le couvercle 6 est en position déverrouillée. L'autre alésage 101 possède de préférence un diamètre inférieur ou égal à 1 cm. Le diamètre de l'alésage 101 est par exemple de 6 mm. De plus, le bouton poussoir 60 est monté mobile contre un élément de rappel élastique 66, tel que visible sur les figures 2, 4 et 5.

Ainsi, dans la mesure où l'élément de transmission 100 affleure et compte tenu des dimensions de l'autre alésage 101, il n'est pas possible d'actionner la tige de commande 62 pour commander le fonctionnement du moteur électrique 38 sans que, d'une part, le réceptacle intermédiaire amovible 9 ne soit en place ni que, d'autre part, le couvercle 6 ne soit convenablement positionné sur la tête 3. Cette disposition limite les risques de blessures qui résulteraient d'une mise en mouvement de l'outil de coupe 10 mobile alors que le couvercle 6 et le réceptacle intermédiaire amovible 9 ne seraient pas en place.

Par ailleurs, lorsque le bouton poussoir 60 est enfoncé, le doigt de manoeuvre 64 est inséré dans l'autre alésage 101 et l'élément de transmission 92 est inséré dans l'alésage 63, de sorte que le couvercle 6 est bloqué en position verrouillée sur le châssis 1.

L'appareil de découpe d'aliments selon l'invention, ainsi constitué, est mis en oeuvre de la manière suivante.

Tout d'abord, l'utilisateur dispose le réceptacle intermédiaire amovible 9 dans la chambre de travail 98 du châssis 1. L'utilisateur sélectionne ensuite un outil de coupe 10 ; 10' ; 10" mobile pour le placer dans la glissière 99 formée par le réceptacle intermédiaire amovible 9. Lorsque l'outil de coupe 10" est associé à un outil de coupe complémentaire 11 ; 11' fixe, l'utilisateur place le corps 12 de l'outil de coupe complémentaire 11 ; 11' dans la fenêtre 94.

L'utilisateur sélectionne par exemple l'ensemble formé par l'outil de coupe 10" et l'outil de coupe complémentaire 11 pour le placer dans le réceptacle intermédiaire amovible 9. Ensuite, le couvercle 6 est mis en place sur la tête 3, de sorte que l'outil de coupe 10", l'outil de coupe complémentaire 11 ainsi que la zone de coupe 4 ne soient pas accessibles par le dessus de l'appareil. Dans la mesure où le couvercle 6 est convenablement placé, une pression sur le bouton-poussoir 60 permet de déclencher le fonctionnement du moteur électrique 38 et donc la mise en mouvement de l'outil de coupe 10". Afin d'augmenter la sécurité de l'appareil, selon une forme préférée mais non strictement nécessaire de réalisation de l'invention, l'interrupteur 61 possède une position ouverte stable et une position fermée instable. Ainsi, le bouton-poussoir 60 doit être maintenu enfoncé pour assurer un fonctionnement continu du moteur électrique 38, tout relâchement du bouton-poussoir 60 entraînant alors un arrêt du moteur électrique 38. Par ailleurs, il doit être noté que lorsque le bouton-poussoir 60 est enfoncé, le doigt de manoeuvre 64 est engagé dans l'alésage 63, ce qui bloque la translation du couvercle 6 qui ne peut alors être déplacé de sa position verrouillée vers sa position de déverrouillée. Cette disposition augmente encore la sécurité d'utilisation de l'appareil selon l'invention.

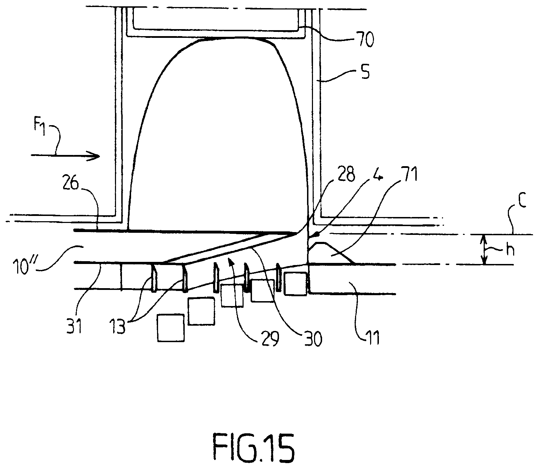

Les aliments à découper sont introduits dans la goulotte pour y être poussés au moyen d'un poussoir 70. A titre d'exemple, la figure 15 montre schématiquement le fonctionnement combiné de l'outil de coupe 10" et de l'outil de coupe complémentaire 11 lors de la découpe d'une pomme de terre.

Lorsque l'extrémité inférieure de la pomme de terre arrive dans la zone de coupe 4, elle vient en appui contre les organes de coupe 13 de l'outil de coupe complémentaire 11. Lors de son déplacement dans le sens de travail indiqué par la flèche F1, l'arrête de coupe principale 28 de l'outil de coupe 10" tranche la partie de la pomme de terre se trouvant dans la zone de coupe 4 entre l'outil de coupe complémentaire 11 et le plan de coupe C. Au fur et à mesure de l'avancement de l'outil de coupe 10", le biseau 30 presse la partie découpée contre les organes de coupe 13 de l'outil de coupe complémentaire 11 de sorte que la partie découpée se trouve tranchée parallèlement à la direction Δ d'extension et donc divisée en bâtonnets qui viennent se placer entre les organes de coupe 13. Les bâtonnets ainsi découpés seront alors expulsés lors du prochain passage de l'outil de coupe 10".

Il est à noter que le talon 31 du sabot presseur 29 contribue à assurer un parfait engagement des bâtonnets entre les organes de coupe 13.

Par ailleurs, afin d'éviter que la partie découpée ne suive la translation de l'outil de coupe 10", l'outil de coupe complémentaire 11 comprend de préférence une butée 71 d'appui qui s'étend transversalement au plan de coupe C et se trouve sensiblement en regard de l'arrêt de coupe principale 28. Selon l'exemple illustré la butée 71 est mobile entre une position de travail T, telle qu'illustrée en traits pleins à la figure 5, et une position de retrait A, illustrée en traits discontinus à la figure 9, dans laquelle la butée 71 est effacée en dessous du plan de coupe C. La butée 71 est alors asservie en position de travail T par des moyens de rappel élastiques 72 tels qu'un ressort hélicoïdal. Ainsi, la butée 71 peut passer de manière automatique en position de retrait A sous l'effet de la pression exercée par le biseau 30 du sabot presseur 29.

Il apparaît donc que l'appareil équipé de l'outil de coupe 10" mobile et de l'outil de coupe complémentaire 11 fixe, permet de réaliser en un seul passage la découpe d'un aliment en bâtonnets.

Après leur découpe les aliments traversent la fenêtre 94 de chute en étant canalisés par la jupe périphérique 95 pour sortir par l'ouverture 105 de chute délimitée par la jupe périphérique 95 à l'opposé de la fenêtre 94 de chute.

Selon l'exemple de réalisation de l'outil de coupe complémentaire 11 décrit en relation avec les figures 9 et 11, l'outil de coupe complémentaire 11 comprend une seule série d'organes de coupe 13. Toutefois l'outil de coupe complémentaire 11' peut également comprendre une deuxième série d'autres organes de coupe 73 comme cela est illustré aux figures 10 et 12. Les autres organes de coupe 73 de la deuxième série sont parallèles entre eux et à la direction de déplacement D de l'outil de coupe 10". Chaque autre organe de coupe 73 s'étend en outre dans un plan sensiblement parallèle à la direction Δ d'extension de la goulotte 5. La première série d'organes de coupe 13 et la deuxième série d'autres organes de coupe 73 définissent alors une grille de découpe 17 permettant de réaliser un tranchage des aliments en cubes ou petits bâtonnets.

Après utilisation de l'appareil, l'utilisateur ôte le couvercle 6 et retire l'outil de coupe 10 ; 10' ; 10" mobile et le cas échéant l'outil de coupe complémentaire 11 ; 11'. L'utilisateur peut alors enlever le réceptacle intermédiaire amovible 9 pour le laver. Le couvercle 6 également dépourvu de parties électriques peut aussi être lavé aisément. La jupe périphérique 95 et la bavette 106 permettent de protéger le châssis 1 des projections de morceaux et/ou de jus d'aliments, ce qui rend superflu un nettoyage approfondi du châssis 1.

Selon l'exemple illustré aux figures 2, 3, 4, 6 et 7, le réceptacle intermédiaire amovible 9 comprend en outre une cuvette 110 située à l'opposé de la fente 97 par rapport à la fenêtre 94. La cuvette 110 permet de récupérer les talons des aliments qui sont trop fins pour être découpés par l'outil de coupe 10 ; 10' ; 10" mobile. A cet effet la cuvette 110 est séparée de la fenêtre 94 par une paroi transversale 111 présentant une hauteur inférieure à la hauteur des bords latéraux 92. L'outil de coupe 10, 10', 10" mobile présente une extrémité inférieure 39 échancrée, pour franchir la paroi transversale 111, tel que visible sur les figures 3 et 8 à 12.

Bien entendu, diverses autres modifications peuvent être apportées à l'appareil selon l'invention dans le cadre des revendications annexées.

A titre de variante, le réceptacle intermédiaire amovible 9 ne comporte pas nécessairement un élément de transmission 100. Notamment le bouton-poussoir 60 peut actionner directement la tige de commande 62, par exemple avec le doigt de manoeuvre 64.

A titre de variante, le couvercle 6 n'est pas nécessairement monté mobile en translation sur le châssis 1 vers la position verrouillée au moyen de pions 7 coopérant chacun avec une rampe de verrouillage 8 portée par le châssis 1. Le couvercle 6 peut notamment être monté pivotant par rapport au châssis 1 et occuper une position verrouillée sur le châssis 1 dans laquelle le couvercle 6 couvre la zone de coupe 4 et l'outil de coupe 10 ; 10' ; 10" de manière à ce que ceux-ci ne soient pas accessibles par le dessus de l'appareil. Le couvercle 6 peut alors être verrouillé par rapport au châssis 1 par un verrou mobile monté sur le châssis ou sur le couvercle 6.

A titre de variante, le couvercle 6 n'est pas nécessairement monté amovible par rapport au châssis 1, mais peut notamment être simplement monté mobile sur le châssis 1 entre la position verrouillée et une position dans laquelle l'outil de coupe 10 ; 10' ; 10" est accessible.

Par ailleurs, selon l'exemple décrit précédemment en relation avec les figures 1 à 7, le réceptacle intermédiaire amovible 9 comprend la cuvette 110 qui fait partie intégrante dudit réceptacle intermédiaire amovible 9. Toutefois, selon l'invention le réceptacle intermédiaire amovible 9 ne comprend pas nécessairement une telle cuvette 110. Ainsi, l'appareil selon l'invention peut ne pas comprendre une telle cuvette 110.

Toutefois, selon une variante de réalisation de l'appareil, la cuvette 110 peut être agencée directement dans le châssis 1 et, plus particulièrement, dans la tête 3 de manière à être adjacente à la zone de coupe 4, comme le montre la figure 18. Selon cet exemple, la cuvette 110' fait partie intégrante de la tête 3 et se trouve indépendante du réceptacle intermédiaire amovible 9 qui n'est alors pas nécessairement mis en oeuvre. Bien entendu, la cuvette 110' peut également être adaptée de manière amovible dans le châssis 1.

Ainsi, l'appareil de découpe d'aliments selon l'invention peut comprendre :
- un châssis 1 délimitant une chambre de travail 98 qui intègre une zone de coupe 4 et qui est ouverte vers le bas au niveau de la zone de coupe 4,
- un couvercle 6 monté mobile sur le châssis 1, le couvercle 6 présentant une goulotte 5 d'introduction d'aliments à découper située au dessus de la zone de coupe 4 et fermant la chambre de travail 98 sur le dessus,
- un outil de coupe 10 ; 10' ; 10" mobile par rapport au châssis 1 au moins dans la zone de coupe 4 et selon un mouvement alternatif rectiligne dans un plan de coupe C,
- des moyens de manoeuvre 36 de l'outil de coupe 10 ; 10' ; 10" mobile qui comprennent un système de transmission 40 présentant un organe d'entraînement 37 entraînant un organe d'accouplement 35 de l'outil de coupe 10 ; 10' ; 10",
- une cuvette 110 ; 110' de réception de talon adjacente à la zone de coupe 4.

Dans une telle configuration l'appareil ne comprend pas nécessairement le réceptacle intermédiaire amovible 9, et la cuvette 110 ; 110' peut être amovible ou faire partie intégrante du châssis 1.

De manière préférée, la cuvette 110 ; 110' est située à l'opposé de l'organe d'entraînement 37 par rapport à la zone de coupe 4.

La présente invention n'est nullement limitée à l'exemple de réalisation décrit et à ses variantes, mais englobe de nombreuses modifications dans le cadre des revendications.

## Revendications

1. Appareil de découpe d'aliments comprenant :
- un châssis (1) délimitant une chambre de travail (98) qui intègre une zone de coupe (4) et qui est ouverte vers le bas au niveau de la zone de coupe (4),
- un couvercle (6) monté mobile sur le châssis (1), le couvercle (6) présentant une goulotte (5) d'introduction d'aliments à découper située au-dessus de la zone de coupe (4) et fermant la chambre de travail (98) sur le dessus,
- un outil de coupe (10 ; 10' ; 10") mobile par rapport au châssis (1) au moins dans la zone de coupe (4), selon un mouvement alternatif rectiligne dans un plan de coupe (C),
- des moyens de manoeuvre (36) de l'outil de coupe (10 ; 10' ; 10") qui comprennent un système de transmission (40) présentant un organe d'entraînement (37) entraînant un organe d'accouplement (35) de l'outil de coupe (10 ; 10' ; 10"),
**caractérisé en ce qu'**il comprend une cuvette (110, 110') de réception de talon d'aliments adjacente à la zone de coupe (4) et **en ce que** la cuvette (110, 110') est située à l'opposé de l'organe d'entraînement (37) par rapport à la zone de coupe (4).

2. Appareil de découpe d'aliments selon la revendication 1, **caractérisé en ce que** la cuvette (110, 110') est adaptée de manière amovible dans le châssis (1).

3. Appareil de découpe d'aliments selon la revendication 1, **caractérisé en ce que** la cuvette (110, 110') fait partie intégrante du chassis (1).

4. Appareil de découpe d'aliments selon l'une des revendications 1 à 3, **caractérisé en ce que** :
- les moyens de manoeuvre (36) comprennent un moteur (38) électrique associé au système de transmission (40),
- le couvercle (6) peut être placé dans une position verrouillée sur le châssis (1), dans laquelle le couvercle (6) couvre la chambre de travail (98) de manière à ce que la zone de coupe (4) et l'outil de coupe (10 ; 10' ; 10") ne soient pas accessibles par le dessus de l'appareil,
- et **en ce qu'**il comprend des moyens de commande du moteur (38) électrique qui comprennent un organe de commande (69) placé sur couvercle (6) et sont adaptés pour qu'une action sur l'organe de commande (69) permette une mise en marche du moteur (38) électrique lorsque le couvercle (6) est en position verrouillée.

5. Appareil de découpe d'aliments selon la revendication 4, **caractérisé en ce que** :
- le couvercle (6) est mobile entre la position verrouillée et une position déverrouillée dans laquelle le couvercle (6) peut être retiré de manière à offrir un accès au moins à la zone de coupe (4),
- les moyens de commande du moteur (38) électrique sont adaptés pour qu'une action sur l'organe de commande (69) ne permette pas une mise en marche du moteur (38) électrique lorsque le couvercle (6) est en position déverrouillée.

6. Appareil de découpe d'aliments selon l'une des revendications 4 ou 5, **caractérisé en ce que** :
- les moyens de commande comprennent un interrupteur (61) situé dans le châssis (1) de l'appareil, l'interrupteur (61) étant actionné par l'intermédiaire d'une tige de commande (62) disposée dans un alésage (63) du châssis (1) agencé en regard du couvercle (6) occupant la position verrouillée,
- l'organe de commande (69) est formé par un bouton-poussoir (60) qui est adapté pour actionner la tige de commande (62) lorsque le couvercle (6) est en position verrouillée, si désiré par l'intermédiaire d'un élément de transmission (100).

7. Appareil de découpe d'aliments selon la revendication 6, **caractérisé en ce que** l'élément de transmission (100) est disposé dans un autre alésage (101) du réceptacle intermédiaire amovible (9).

8. Appareil de découpe d'aliments selon la revendication 7, **caractérisé en ce que** l'extrémité supérieure de l'élément de transmission (100) affleure au niveau d'une surface supérieure du réceptacle intermédiaire amovible (9) située sous le couvercle (6).

9. Appareil de découpe d'aliments selon la revendication 5 et l'une des revendications 7 ou 8, **caractérisé en ce que** le bouton-poussoir (60) est solidaire d'un doigt de manoeuvre (64) qui présente un diamètre inférieur à celui de l'autre alésage (101) et qui est situé en regard de l'autre alésage (101) lorsque le couvercle (6) est en position verrouillée et décalé par rapport à l'autre alésage (101) lorsque le couvercle (6) est en position déverrouillée.

## Patentansprüche

1. Gerät zum Zerkleinern von Lebensmitteln, umfassend:
- ein Gestell (1), das einen Arbeitsraum (98) begrenzt, in dem sich ein Schneidbereich (4) befindet und der in dem Schneidbereich (4) nach unten geöffnet ist,
- einen Deckel (6), der beweglich auf dem Gestell (1) montiert ist, wobei der Deckel (6) einen Schacht (5) zum Einführen von zu zerkleinernden Lebensmitteln aufweist, der sich über dem Schneidbereich (4) befindet und den Arbeitsraum (98) nach oben verschließt,
- ein Schneidwerkzeug (10; 10'; 10"), das zumindest im Schneidbereich (4) in Bezug auf das Gestell (1) in einer Schneidebene (C) geradlinig hin- und herbewegt werden kann,
- Mittel (36) zur Betätigung des Schneidwerkzeugs (10; 10'; 10"), die ein Übertragungssystem (40) mit einem Antriebselement (37) umfassen, das ein Kupplungselement (35) des Schneidwerkzeugs (10; 10'; 10") antreibt,
**dadurch gekennzeichnet, dass** es eine Vertiefung (110, 110') zur Aufnahme von Lebensmittelabschnitten neben dem Schneidbereich (4) umfasst, und dass sich die Vertiefung (110, 110') gegenüber dem Antriebselement (37) in Bezug auf den
Schneidbereich (4) befindet.

2. Gerät zum Zerkleinern von Lebensmitteln nach Anspruch 1, **dadurch gekennzeichnet, dass** die Vertiefung (110, 110') abnehmbar in dem Gestell (1) eingesetzt ist.

3. Gerät zum Zerkleinern von Lebensmitteln nach Anspruch 1, **dadurch gekennzeichnet, dass** die Vertiefung (110, 110') ein integraler Bestandteil des Gestells (1) ist.

4. Gerät zum Zerkleinern von Lebensmitteln nach einem der Ansprüche 1 bis 3, **dadurch gekennzeichnet, dass**
- die Betätigungsmittel (36) einen zu dem Übertragungssystem (40) gehörigen Elektromotor (38) umfassen,
- der Deckel (6) in eine auf dem Gestell (1) verriegelte Stellung gebracht werden kann, in der der Deckel (6) den Arbeitsraum (98) derart abdeckt, dass der Schneidbereich (4) und das Schneidwerkzeug (10; 10'; 10") von der Oberseite des Gerätes nicht zugänglich sind,
- und es Mittel zur Steuerung des Elektromotors (38) umfasst, die ein auf dem Deckel (6) angeordnetes Bedienelement (69) umfassen und so ausgelegt sind, dass der Elektromotor (38) durch eine Betätigung des Bedienelements (69) eingeschaltet werden kann, wenn sich der Deckel (6) in der verriegelten Stellung befindet.

5. Gerät zum Zerkleinern von Lebensmitteln nach Anspruch 4, **dadurch gekennzeichnet, dass**
- sich der Deckel (6) zwischen der verriegelten Stellung und einer entriegelten Stellung bewegen lässt, in der der Deckel (6) abgenommen werden kann, sodass zumindest der Schneidbereich (4) zugänglich gemacht wird,
- die Mittel zur Steuerung des Elektromotors (38) so ausgelegt sind, dass der Elektromotor (38) durch eine Betätigung des Bedienelements (69) nicht eingeschaltet werden kann, wenn sich der Deckel (6) in der entriegelten Stellung befindet.

6. Gerät zum Zerkleinern von Lebensmitteln nach einem der Ansprüche 4 oder 5, **dadurch gekennzeichnet, dass**
- die Steuerungsmittel einen Schalter (61) umfassen, der sich im Gestell (1) des Gerätes befindet, wobei der Schalter (61) über eine Steuerstange (62) betätigt wird, die in einer Bohrung (63) des Gestells (1) angeordnet ist, die dem Deckel (6) gegenüber liegt, wenn dieser die verriegelte Stellung einnimmt,
- das Bedienelement (69) durch einen Drucktaster (60) gebildet wird, der so ausgelegt ist, dass er ggf. über ein Übertragungselement (100) die Steuerstange (62) betätigt, wenn sich der Deckel (6) in der verriegelten Stellung befindet.

7. Gerät zum Zerkleinern von Lebensmitteln nach Anspruch 6, **dadurch gekennzeichnet, dass** sich das Übertragungselement (100) in einer weiteren Bohrung (101) des abnehmbaren Zwischenträgers (9) befindet.

8. Gerät zum Zerkleinern von Lebensmitteln nach Anspruch 7, **dadurch gekennzeichnet, dass** das obere Ende des Übertragungselements (100) mit einer Oberseite des abnehmbaren Zwischenträgers (9), die sich unter dem Deckel (6) befindet, bündig ist.

9. Gerät zum Zerkleinern von Lebensmitteln nach Anspruch 5 und einem der Ansprüche 7 oder 8, **dadurch gekennzeichnet, dass** der Drucktaster (60) mit einem Betätigungsfinger (64) fest verbunden ist, der einen kleineren Durchmesser als die weitere Bohrung (101) aufweist und der weiteren Bohrung (101) gegenüber liegt, wenn sich der Deckel (6) in der verriegelten Stellung befindet, und in Bezug auf die weitere Bohrung (101) versetzt ist, wenn sich der Deckel (6) in der entriegelten Stellung befindet.

## Claims

1. Food cutting appliance comprising:
- a frame (1) defining a working chamber (98) which includes a cutting area (4) and which is open downwards at the level of cutting area (4),
- a lid (6) movably mounted on the frame (1), the lid (6) comprising a chute (5) for introducing the food to be cut located above the cutting area (4) and closing the working chamber (98) on the top,
- a cutting tool (10; 10'; 10") movable relative to the frame (1) at least in the cutting area (4) in a reciprocating rectilinear movement in a cutting plane (C),
- means (36) for manoeuvring the cutting tool (10; 10'; 10"), which comprise a transmission system (40) having a drive member (37) driving a coupling member (35) of the cutting tool (10; 10'; 10"),
**characterised in that** it comprises a bowl (110, 110') for receiving the reserve of food adjacent to the cutting area (4) and **in that** the bowl (110, 110') is located opposite the drive member (37) with respect to the cutting area (4).

2. Food cutting appliance according to claim 1, **characterised in that** the bowl (110, 110') is adapted to be removable in the frame (1).

3. Food cutting appliance according to claim 1, **characterised in that** the bowl (110, 110') is an integral part of the frame (1).

4. Food cutting appliance according to one of claims 1 to 3, **characterised in that**:
- the manoeuvring means (36) comprise an electric motor (38) associated with the transmission system (40),
- the lid (6) can be placed in a locked position on the frame (1), in which the lid (6) covers the working chamber (98) so that the cutting area (4) and the cutting tool (10; 10'; 10") are not accessible from the top of the appliance,
- and **in that** it comprises means for controlling the electric motor (38) which comprise a control member (69) placed on the lid (6) and which are adapted so that an action on the control member (69) starts the electric motor (38) when the lid (6) is in the locked position.

5. Food cutting appliance according to claim 4, **characterised in that**:
- the lid (6) is movable between the locked position and an unlocked position in which the lid (6) can be removed to allow access to at least the cutting area (4),
- the means for controlling the electric motor (38) are adapted so that an action on the control member (69) does not start the electric motor (38) when the lid (6) is in the unlocked position.

6. Food cutting appliance according to claim 4 or 5, **characterised in that**:
- the control means comprise a switch (61) located in the frame (1) of the appliance, the switch (61) being actuated by a control rod (62) in a bore (63) of the frame (1) arranged opposite the lid (6) occupying the locked position,
- the control member (69) consists of a push-button (60) which is adapted to actuate the control rod (62) when the lid (6) is in the locked position, if desired by means of a transmission element (100).

7. Food cutting appliance according to claim 6, **characterised in that** the transmission element (100) is arranged in another bore (101) of the removable intermediate container (9).

8. Food cutting appliance according to claim 7, **characterised in that** the upper end of the transmission element (100) is flush with an upper surface of the removable intermediate container (9) located under the lid (6).

9. Food cutting appliance according to claim 5 and claim 7 or 8, **characterised in that** the push-button (60) is integral with an operating pin (64) whose diameter is less than that of the other bore (101) and which is located opposite the other bore (101) when the lid (6) is in the locked position and offset with respect to the other bore (101) when the lid (6) is in the unlocked position.
